# EUROPÄISCHE PATENTANMELDUNG

(11) **EP 3 835 050 A1**
(43) Veröffentlichungstag der Anmeldung: **16.06.2021**
(21) Anmeldenummer: 20208795.3
(22) Anmeldetag: 20.11.2020
(51) Int. Cl.: B32B 1/08, B32B 5/18, B32B 27/08, B32B 27/30, B32B 27/32, F16L 59/02, F16L 59/14

(54) **VERBUNDWERKSTOFF ZUR KÄLTE- UND/ODER WÄRMEDÄMMUNG SOWIE HALBSCHALENKÖRPER**

(30) Priorität: 13.12.2019 DE 202019106954 U
(71) Anmelder: Ewers Heizungstechnik GmbH, 33758 Schloss Holte-Stukenbrock (DE)
(72) Erfinder: Budde, Jörg, 33775 Versmold (DE); Presto, Dietmar, 33104 Paderborn (DE)
(74) Vertreter: Ostermann, Thomas

(57) **Zusammenfassung**

Die Erfindung betrifft einen Verbundwerkstoff zur Kälte- und/oder Wärmedämmung von fluidgeführten Gegenständen, wie Armaturen, Rohrleitungen oder dergleichen, mit einem nachgiebigen Dämmabschnitt und einem fest mit demselben verbundenen Mantelabschnitt, wobei der Dämmabschnitt aus einem Polymerschaummaterial und der Mantelabschnitt aus einem Polymermaterial besteht, wobei der Dämmabschnitt aus einem Polyolefinschaumstoff und der Mantelabschnitt aus einem Polystyrolmaterial (PS) bestehen.

## Beschreibung

Die Erfindung betrifft einen Verbundwerkstoff zur Kälte- und/oder Wärmedämmung von fluidgeführten Gegenständen, wie Armaturen, Rohrleitungen oder dergleichen, mit einem nachgiebigen Dämmabschnitt und einem fest mit demselben verbundenen Mantelabschnitt, wobei der Dämmabschnitt aus einem Polymerschaummaterial und der Mantelabschnitt aus einem Polymermaterial besteht.

Ferner betrifft die Erfindung einen Halbschalenkörper für eine Kälte- und/oder Wärmedämmung von fluidgeführten Gegenständen.

Aus der EP 2 302 277 A2 ist ein Dämmkörper zur Isolierung von fluidgeführten Gegenständen, wie z.B. Rohren, bekannt, der aus einem expandierten Polypropylenmaterial hergestellt ist. Zur Dämmung des fluidgeführten Gegenstandes werden zwei an die Form desselben angepasste Halbschalenkörper unter Umkleidung des fluidgeführten Gegenstandes miteinander lösbar verbunden. Aufgrund der nachgiebigen Außenfläche kann es jedoch zu Beschädigungen kommen.

Aus der DE 20 2017 107 801 U1 ist eine Vorrichtung zum Dämmen eines fluidgeführten Gegenstandes bekannt, der aus einem Verbundwerkstoff besteht. Der Verbundwerkstoff umfasst einen nachgiebigen Dämmabschnitt, der unmittelbar auf dem fluidgeführten Gegenstand anliegt und diesen umschließt einerseits und einem fest mit dem Dämmabschnitt verbundenen Mantelabschnitt andererseits, der vergleichsweise dünn ausgebildet ist und einen mechanischen Schutz bietet. Der Dämmabschnitt ist aus einem Polymerschaummaterial hergestellt. Der Mantelabschnitt ist aus einem relativ harten Polymermaterial hergestellt. Nachteilig an dem bekannten Verbundwerkstoff ist, dass er nur zur Dämmung in einem begrenzten Temperaturbereich geeignet ist.

Aufgabe der vorliegenden Erfindung ist es daher, einen Verbundwerkstoff zur Kälte- und/oder Wärmedämmung von fluidgeführten Gegenständen sowie Dämmschalenkörper derart weiterzubilden, dass bezogen auf eine Wandstärke die Dämmwirkung weiter verbessert wird.

Zur Lösung dieser Aufgabe ist die Erfindung in Verbindung mit dem Oberbegriff des Patentanspruchs 1 dadurch gekennzeichnet, dass der Dämmabschnitt aus einem Polyolefinschaumstoff und der Mantelabschnitt aus einem Polystyrolmaterial (PS) bestehen.

Der besondere Vorteil der Erfindung besteht darin, dass eine Kälte- und/oder Wärmedämmung von fluidgeführten Gegenständen in einem relativ großen Temperaturbereich gewährleistet ist. Zudem ist der Verbundwerkstoff schwer entflammbar, da er die Brennstoffklasse B1 nach DIN4102-1 bzw. EN13501-1 erfüllt. Überraschenderweise hat sich gezeigt, dass diese verbesserten Eigenschaften dadurch erzielt werden können, dass der Dämmabschnitt aus einem vorzugsweise nachgiebigen Polyolefinschaumstoff und der Mantelabschnitt aus einem Polystyrolmaterial besteht. Die Erfindung ermöglicht eine Diffusionsdichtedämmung, bei der kein Kondenswasser entsteht und der Energieverlust vergleichsweise gering ist. Insbesondere wird verhindert, dass Luftfeuchtigkeit zur Oberfläche des zu dämmenden Gegenstandes gelangt.

Nach einer Weiterbildung der Erfindung besteht der Dämmabschnitt aus einem Polypropylenmaterial (PP). Es hat sich gezeigt, dass die thermischen Eigenschaften dieses Materials besonders gut zur Dämmung verwendet werden können.

Nach einer Weiterbildung der Erfindung ist der Dämmabschnitt als Brandschutzabschnitt ausgebildet, der die brandschutzrechtlichen Normen nicht nur erfüllt, sondern weit übersteigt.

Nach einer Weiterbildung der Erfindung ist der Dämmabschnitt aus einem geschlossenzelligen Polyolefinmaterial (PEF) gebildet mit einer Temperaturbeständigkeit im Bereich von -10°C bis 140°C, vorzugsweise -10°C bis 180°C. Vorteilhaft wird hierdurch die Dämmwirkung in einem relativ großen Temperaturbereich bereitgestellt.

Nach einer Weiterbildung der Erfindung weist der Dämmabschnitt und/oder der Mantelabschnitt eine auf den zu dämmenden Gegenstand angepasste Form auf. Von außen ist somit erkennbar, ob es sich um eine Rohrdämmung oder um eine Flanschdämmung handelt. Vorteilhaft kann ein passgenauer Sitz des Dämmabschnitts bereitgestellt werden.

Nach einer Weiterbildung der Erfindung weist der Mantelabschnitt eine mehr als doppelt so hohe Dichte auf wie der Dämmabschnitt. Vorzugsweise weist der Mantelabschnitt eine glatte Oberfläche auf, so dass die Dämmung vor Beschädigungen geschützt ist.

Nach einer Weiterbildung der Erfindung werden der Dämmabschnitt und der Mantelabschnitt durch Laminieren hergestellt. Vorteilhaft kann der Verbundwerkstoff in einem einzigen Herstellungsschritt hergestellt werden.

Zur Lösung der Aufgabe weist die Erfindung die Merkmale des Patentanspruchs 11 auf.

Zur Dämmung von Gegenständen können zwei oder mehr Dämmschalenkörper den Gegenstand umgeben und mittels Clipse einfach und lösbar verbunden sein.

Ein Ausführungsbeispiel der Erfindung wird nachfolgend anhand einer Zeichnung näher erläutert.

Es zeigt:
- Figur 1: eine perspektivische Darstellung eines aus zwei Dämmschalen gebildeten Dämmkörpers und
- Figur 2: einen Querschnitt des Dämmkörpers gemäß Figur 1 im zusammengebauten Zustand.

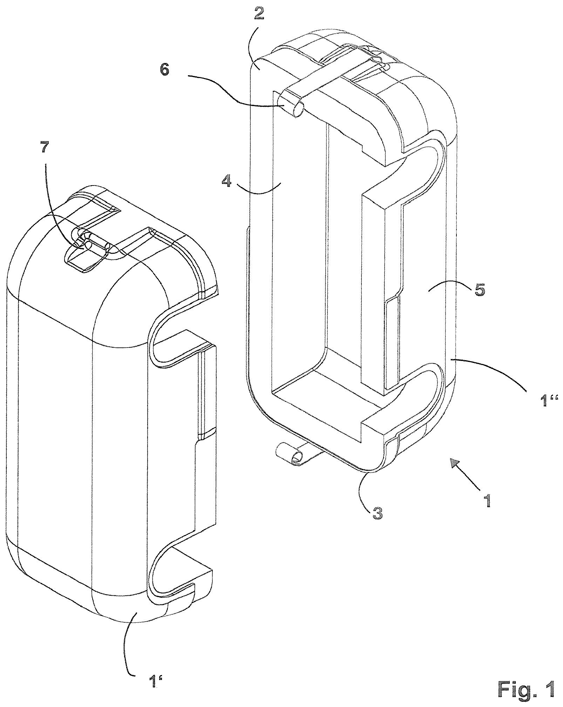

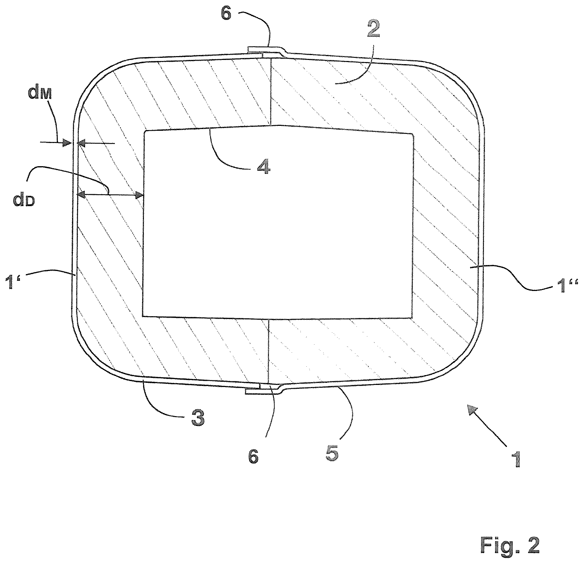

Zur Kälte- und/oder Wärmedämmung von fluidgeführten Gegenständen, insbesondere zur Diffusionsdichtendämmung von fluidgeführten Gegenständen, wie Armaturen, Rohrleitungen oder dergleichen ist ein in den Figuren 1 und 2 dargestellter Dämmkörper bestehend aus einem ersten Dämmschalenkörper 1' und einem zweiten Dämmschalenkörper 1" vorgesehen. Der erste Dämmschalenkörper 1' und der zweite Dämmschalenkörper 1" sind über Befestigungsmittel 6 lösbar miteinander verbunden.

Die Dämmschalenkörper 1' und 1" sind jeweils gebildet aus einem Verbundwerkstoff, der durch Laminieren einer einen Dämmabschnitt 2 desselben bildenden ersten Bahn und einer einen Mantelabschnitt 3 desselben bildenden zweiten Bahn hergestellt ist. Mittels vorzugsweise eines Presswerkzeugs erhält der Dämmschalenkörper 1' bzw. 1" durch Tiefziehen eine vorzugsweisetopfförmige Formgebung. Durch Trennen, vorzugsweise durch Wasserstrahlschneiden, kann der so hergestellte Dämmschalenkörper 1', 1" auf die vorgegebene Länge abgelängt werden. Ein zu dämmender Gegenstand, wie beispielsweise eine Rohrleitung, kann dann abschnittsweise durch zwei Dämmschalenkörper 1', 1" umgeben sein, wobei die umgebenden Dämmschalenkörper 1', 1" durch eine Clipsverbindung lösbar miteinander verbunden sind. Die Clipsverbindung kann beispielsweise klammerartig bzw. federnd ausgebildete Clipse 6 aus einem Federstahlmaterial aufweisen, die fest mit dem ersten Dämmschalenkörper 1 verbunden und eine widerhakenförmige Ausnehmung 7 des zweiten Dämmschalenkörpers 1' hintergreifen.

Bei der Herstellung des Verbundwerkstoffs erfolgt zuerst ein Zusammenlaminieren der ersten Bahn und der zweiten Bahn unter Bildung von Wärme und Druck, wobei nachfolgend bei Aufrechterhaltung der Prozesstemperatur das Tiefziehen zur Formgebung der Dämmschalenkörper erfolgt.

Der Dämmabschnitt 2 besteht aus einem nachgiebigen Polymermaterial. Der Mantelabschnitt 3 besteht aus einem starren Polymermaterial.

Der Mantelabschnitt 3 besteht aus einem Polystyrolmaterial (PS). Der Mantelabschnitt 3 ist als ein Brandschutzabschnitt ausgebildet (UL-94-V0), der unter Erfüllung der Norm EN13501-1 und der Norm DIN4102-1 normal entflammbar ist.

Der Dämmabschnitt 2 besteht aus einem Polyolefinschaumstoff, insbesondere aus einem Polypropylenmaterial (PP). Insbesondere besteht der Dämmabschnitt 2 aus einem geschlossenzelligen Polyolefinmaterial mit einer Temperaturbeständigkeit in einem Bereich von -10°C bis 140°C, vorzugsweise - 10°C bis 180°C, insbesondere in einem Bereich von -10°C bis 165°C.

Der Dämmabschnitt 2 ist als ein Brandschutzabschnitt ausgebildet, der unter Erfüllung der Norm EN13501-01 und der Norm DIN4102-1 normal entflammbar ist.

Der Dämmabschnitt 2 weist eine Dicke d_{D} auf, die um mehr als das doppelte größer ist als eine Dicke d_{M} des Mantelabschnitts 3. Vorzugsweise ist die Dicke d_{D} des Dämmabschnitts 2 größer als das Vierfache der Dicke d_{M} des Mantelabschnitts 3.

Der Verbundwerkstoff 1 ist als ein Brandschutzabschnitt ausgebildet, durch das Zusammenlaminieren unter Bildung von Wärme und Druck, der unter Erfüllung der Norm EN13501-1 und der Norm DIN4102-1 schwer entflammbar ist.

Der Dämmabschnitt 2 weist eine freie Flachseite 4 auf, die in der Montageposition des Verbundwerkstoffs 1 bzw. der Dämmschalenkörper 1, 1' flächig und dichtend an einer Außenfläche des zu dämmenden Gegenstandes anliegt.

Die Dicke d_{M} des Mantelabschnitts 3 kann beispielsweise 2 mm betragen. Der Dämmabschnitt 2 kann aus einer Mehrzahl von gleich dicken Bahnen gebildet sein, deren Dicke gleich ist und/oder gleich ist zu der Dicke d_{M} des einbahnig ausgeführten Mantelabschnitts 3.

Auf einer dem Dämmabschnitt 2 abgewandten Seite weist der Mantelabschnitt 3 eine Flachseite 4 auf, die eine Außenhaut 5 des Verbundwerkstoffs 1 bzw. des Dämmschalenkörpers 1, 1' bildet. Die Oberfläche der Außenhaut 5 kann beispielsweise genarbt ausgebildet sein. Hierdurch ist ein Oberflächenschutz gewährt. Zudem ist die Außenhaut 5 des Verbundwerkstoffs 1 leicht zu reinigen.

Der Mantelabschnitt 3 bildet eine relativ dünne Deckschicht des Dämmschalenkörpers 1, 1'. Der Dämmabschnitt 2 bildet eine relativ dicke Kernschicht des Dämmschalenkörpers 1, 1'.

Die Form des Dämmabschnitts 2 und des Mantelabschnitts 3 ist an die Formgebung des zu dämmenden Gegenstandes angepasst. Die Gesamtdicke (d_{M} + d_{D}) des Verbundwerkstoffs 1 ist vorzugsweise konstant. Auf diese Weise kann von außen die Isolierung bzw. Dämmung eines als Rohr und Flansch ausgebildeten Gegenstandes erkannt werden.

Der Dämmabschnitt 2 weist eine Wasserdampfdurchlässigkeit µ von 3.000 auf und entspricht somit der Norm EN12086.

Der Dämmabschnitt 2 weist eine Wärmeleitfähigkeit 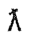 bei 40°C von 0,038 W/mK auf.

Der Mantelabschnitt 3 weist eine höhere Wärmeleitfähigkeit auf als der Dämmabschnitt 2. Der Mantelabschnitt 3 weist eine Wärmeleitfähigkeit im Bereich von 0,12 W/mK bis 0,20 W/mK bei 40°C, vorzugsweise 0,17 W/mK bei 40°C, auf.

Der Mantelabschnitt 3 weist eine doppelt so hohe Dichte auf wie der Dämmabschnitt 2.

Die Dichte des Mantelabschnitts 3 kann beispielsweise 1,15 g/cm³ betragen.

Der Mantelabschnitt 3 ist der formgebende Teil des Verbundwerkstoffs 1. Aufgrund thermischer Einwirkung kann der Mantelabschnitt 3 in die gewünschte Formgebung gebracht werden. Da der Dämmabschnitt 2 flexibel und nachgiebig ausgebildet ist, folgt der Dämmabschnitt 2 der Formänderung des Materialabschnitts 3 in dem als Verbundwerkstoff 1 zusammengefügten Zustand.

Der erfindungsgemäße Verbundwerkstoff 1 weist eine hohe Druckfestigkeit, Formstabilität und Maßgenauigkeit auf.

## Patentansprüche

1. Verbundwerkstoff zur Kälte- und/oder Wärmedämmung von fluidgeführten Gegenständen, wie Armaturen, Rohrleitungen oder dergleichen, mit einem nachgiebigen Dämmabschnitt (2) und einem fest mit demselben verbundenen Mantelabschnitt (3), wobei der Dämmabschnitt (2) aus einem Polymerschaummaterial und der Mantelabschnitt (3) aus einem Polymermaterial besteht, **dadurch gekennzeichnet, dass** der Dämmabschnitt (2) aus einem Polyolefinschaumstoff und der Mantelabschnitt (3) aus einem Polystyrolmaterial (PS) besteht.

2. Verbundwerkstoff nach Anspruch 1, **dadurch gekennzeichnet, dass** der Dämmabschnitt (2) aus einem Polypropylenmaterial (PP) besteht.

3. Verbundwerkstoff nach Anspruch 1 oder 2, **dadurch gekennzeichnet, dass** der Dämmabschnitt (2) als ein Brandschutzabschnitt ausgebildet ist, der entsprechend der unter Erfüllung der Norm EN 13501 und/oder der Norm DIN4102-1 schwer entflammbar ist.

4. Verbundwerkstoff nach einem der Ansprüche 1 bis 3, **dadurch gekennzeichnet, dass** der Dämmabschnitt (2) aus einem geschlossenzelligen Polyolefinmaterial besteht mit einer Temperaturbeständigkeit in einem Bereich von -10°C bis 140°C, vorzugsweise -10°C bis 180°C.

5. Verbundwerkstoff nach einem der Ansprüche 1 bis 4, **dadurch gekennzeichnet, dass** der Dämmabschnitt (2) und/oder der Mantelabschnitt (3) eine an den zu dämmenden Gegenstand angepasste Form aufweist.

6. Verbundwerkstoff nach einem der Ansprüche 1 bis 5, **dadurch gekennzeichnet, dass** der Dämmabschnitt (2) eine Wasserdampfdurchlässigkeit µ = 3.000 entsprechend der Norm EN12086 aufweist.

7. Verbundwerkstoff nach einem der Ansprüche 1 bis 6, **dadurch gekennzeichnet, dass** der Dämmabschnitt (2) eine Wärmeleitfähigkeit ( 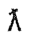 ) bei 40°C von 0,038 W/mK aufweist.

8. Verbundwerkstoff nach einem der Ansprüche 1 bis 7, **dadurch gekennzeichnet, dass** der Mantelabschnitt (3) eine höhere Wärmeleitfähigkeit aufweist als der Dämmabschnitt (2), insbesondere 0,17 W/mK bei 40°C.

9. Verbundwerkstoff nach einem der Ansprüche 1 bis 8, **dadurch gekennzeichnet, dass** der Mantelabschnitt (3) eine mehr als doppelt so hohe Dichte aufweist als der Dämmabschnitt (2).

10. Verbundwerkstoff nach einem der Ansprüche 1 bis 9, **dadurch gekennzeichnet, dass** der Verbundwerkstoff (1) durch Laminieren einer den Dämmabschnitt (2) bildenden ersten Materialbahn und einer den Mantelabschnitt (3) bildenden zweiten Materialbahn hergestellt ist.

11. Dämmschalenkörper aus einem Verbundwerkstoff nach einem der Ansprüche 1 bis 10, wobei mindestens zwei Dämmschalenkörper (1, 1') mittels einer Clipsverbindung lösbar den zu dämmenden Gegenstand umschließen.
